(19) Europäisches Patentamt / European Patent Office / Office européen des brevets

(11) **EP 2 961 180 A1**

(12) **EUROPEAN PATENT APPLICATION**

(43) Date of publication:
**30.12.2015 Bulletin 2015/53**

(51) Int Cl.:
*H04N 21/4627* [(2011.01)]    *H04N 21/83* [(2011.01)]
*G06F 17/30* [(2006.01)]

(21) Application number: **14305974.9**

(22) Date of filing: **23.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Chupeau, Bertrand
35576 Cesson-Sévigné (FR)**

• **Robert, Antoine
35576 Cesson-Sévigné (FR)**
• **Lefebvre, Frédéric
35576 Cesson-Sévigné (FR)**

(74) Representative: **Huchet, Anne
Technicolor
1-5 rue Jeanne d'Arc
92130 Issy-Les-Moulineaux (FR)**

(54) **Content creation method, content registration method, devices and corresponding programs**

(57) The invention relates to a method for creating one distribution content (DC) from one original master content (OMC) where the method comprises first obtaining a set of fingerprint for the original master content and then creating the distribution content (DC), with saving, in a database, a set of transformation (STF) of the original master content. Then, when a copy content has to be registered, the invention proposes a method for registering the content to the distribution content where a distortion model is obtained by comparing the set of fingerprint of the original master content with a set of fingerprint of the copy content. The set of transformation (STF) is then combined with the distortion model (DTM) for registering the copy content.

Figure 3

## Description

### 1. Technical field

The invention relates to video registration in a context of video investigation. The proposed technique is more specifically linked to a system for automatic registration of video copies. According to the present document, it is reminded that video registration is a process of establishing a frame-by-frame correspondence between two videos, known as temporal registration, possibly complemented by establishing a point-by-point correspondence between the corresponding frames, known as spatial registration. Image registration is the process of establishing point-by-point correspondence between two images. Video alignment and image alignment are synonyms to, respectively, video and image registration.

Video registration is important because it allows matching an original content with an unauthorized content in order to extract, from the unauthorized content, one or several marks (watermarks). These marks have usually been inserted in the original content. When copying the original content to create the unauthorized content, the marks are preserved in the copied content.

### 2. Prior Art Solutions

The goal of video investigation when searching for proofs of counterfeit is to analyze unauthorized video contents to determine the origin of the leakage and more generally to extract any information useful for characterizing the "piracy workflow". An example is the decoding of watermarks identifying a set-top-box in a VOD scenario, but there exists many other problems to solve. Most of these problems, however, share the pre-requisite of compensating for temporal and geometrical distortions of pirate copies of content, prior to any further analysis.

Indeed, one major problem faced by investigators is to synchronize a copy with an original content. This synchronization is needed in order to be able to extract, from this copy, a various number of marks or identification information which could be useful for identifying an origin of the copy.

Since a direct access to a master content is not always feasible (or even allowed by the content owners) at investigation side, a classical "semi-blind" solution is to compute and transmit condensed "fingerprints" (FP) of the content (a fingerprint is, in this context, a representative feature or characteristic extracted from the content, and not a watermark inserted in this content). This condensed "fingerprints" of the content comprises specific properties of temporal evolution and local key-points on key-frames of the content. The condensed "fingerprints" (FP) of the content is constructed by the original content owner.

The investigators then extract the same fingerprints from a copy and a registration module is able to estimate temporal and geometric distortion parameters from input master and copy fingerprints. Those distortion parameters can then be used by further applications (such as watermark decoding) to compensate for distortions prior to analysis.

An investigation framework with distributed master FP for registration purpose implicitly assumes that an original content is distributed in a unique spatial and temporal format, so that a pirate copy has to be aligned with this unique spatial and temporal grid. For a system dedicated to a single task, such as decoding the payload of a given watermark for VOD, this approach is valid as the watermark is embedded in content distributed with a unique given frame rate and resolution. Such a framework will only be able, however, to investigate pirate copies leaking from this VOD distribution. Such framework is described in *"A framework for video forensics based on local and temporal fingerprints"* (S. Baudry, B. Chupeau, F. Lefèbvre, Int. Conf. on Image Processing 2009*)*.

But a more generic investigation framework has to be able to analyze pirate copies originating from multiple sources, such as DVD, Blu-ray, legacy cinema, digital cinema, etc. Each distribution source thus have different master temporal and spatial resolutions (e.g. Blu-ray: 1920×1080@24Hz, 1280×720@59.94Hz..., DVD: 720×576@25Hz, 720×480@29.97Hz..., Digital cinema: 4096x2160@48Hz...). Furthermore several versions of the same movie usually coexist, with different editing, for example scenes suppressed for censorship purposes or localization purposes.

A framework supporting the investigation (e.g. by means of watermark decoding) of pirate copies originating from different distribution sources (e.g. digital cinema, Blu-ray or the like) thus requires as many different registration processes as there are different "master" resolutions and versioning. And a straightforward application of the previously described framework would then need to generate and distribute as many different fingerprints to feed these registration processes! This is not realistic either in terms of computational load/transmission bandwidth or difficulty to access to different distribution sources (Blu-ray, iPhone, digital cinema, VOD...).

Thus, the framework proposed in *"A framework for video forensics based on local and temporal fingerprints"* is not adapted to multiple distribution formats of the content. The problem to solve is therefore to find a solution to the plurality of distribution format while enabling investigating on a plurality of pirate copies coming from this plurality of distribution format and without needing several sets of master fingerprints.

### 3. Presentation of the invention

The invention overcomes the drawbacks of the prior art.

The invention relates, in a first aspect, to a method for creating at least one distribution content from at least one original master content characterized in that it comprises the following ordered steps:

- calculating one set of fingerprints called master fingerprints from said at least one original master content;
- creating from said at least one original master content, at least one distribution content, in function of at least one corresponding distribution format.

Thus, the proposed technique allows obtaining a master fingerprints before obtaining the distribution contents. The distribution contents have different formats and the master fingerprint is independent of these formats.

According to a specific embodiment said step of calculating said master fingerprints comprises:

- calculating of temporal fingerprints;
- calculating of spatial-local fingerprints.

According to a specific embodiment said step of creating said at least one distribution content comprises, for a given distribution content, at least one step of recording, in one database, of one set of transformations of said at least one original master content for obtaining said given distribution content.

According to a specific embodiment, said step of recording one set of transformations of said at least one original master content for obtaining said given distribution content comprises:

- recording frame rate conversion ratios from said original master content to said given distribution content;
- recording temporal mapping which are representative of suppressed and added scenes from said original master content to said given distribution content;
- recording spatial mapping which are representative of cropping from said original master content to said given distribution content;
- recording spatial mapping which are representative of re-sampling from said original master content to said given distribution content;

The invention also relates to a device for creating at least one distribution content from at least one original master content. The device comprises:

- a calculator for calculating one set of fingerprints called master fingerprints from said at least one original master content;
- a creating module for creating from said at least one original master content, at least one distribution content, in function of at least one corresponding distribution format.

In a second aspect, the invention relates to a method for registering content. The method comprises :

- extracting a set of fingerprints from said content;
- estimating a distortion model from the set of fingerprints and one set of fingerprints, called master fingerprints previously obtained from at least one original master content from which said content is derived;
- calculating a derived distortion model from said distortion model in function of one set of transformations

Thus, the proposed technique allows registering content only once: it is not needed to register one content several times (i.e. one time per distribution format). The registration is done once and the derived distortion model is applied on the content. If it is then noticed that the derived distortion model is not correct, then it is only necessary to calculated a new derived distortion model with a correct set of transformations.

The invention also relates to a device for registering one content. The device comprises:

- an extracting module for extracting of a set of fingerprints from said content;
- an estimating module for estimating of a distortion model from the set of fingerprints and one set of fingerprints, called master fingerprints previously obtained from at least one original master content from which said content is derived;
- a calculator for calculating a derived distortion model from said distortion model in function of one set of transformations

In a preferred embodiment, the various steps of the methods according to the invention are implemented by one or more software or computer programs comprising software instructions for execution by a data processor or a module, according to the invention and adapted for controlling the execution of the different process steps.

Accordingly, the invention also provides a program which can be executed by a computer or a data processor, the program including instructions for controlling the execution of the steps of a method as mentioned above.

This program can use any programming language, and be in the form of source code, object code or intermediate code between source code and object code, such as a partially compiled form, or in any other desirable form.

The invention also provides a medium readable by a data processor, and containing instructions of a program as mentioned above.

The information carrier may be any entity or device capable of storing the program. For example, the medium may comprise a storage medium, such as a ROM, for example a CD ROM or a microelectronic circuit, or a magnetic recording medium, such as a diskette (floppy disk) or a hard drive.

On the other hand, the information carrier may be a transmissible carrier such as an electrical or optical signal which may be conveyed via electrical or optical cable, by radio or by other means. The program according to the invention may in particular be downloaded over a network such as the Internet.

Alternatively, the information carrier may be an integrated circuit in which the program is incorporated, the circuit being adapted to perform or to be used in carrying out the process in question.

According to one embodiment, the invention is implemented using software and/or hardware. In this context, the term "module" can correspond in this document as well as a software component to a hardware component or a set of hardware and software components.

A software component is one or more computer programs, one or more sub-programs of a program, or more generally to any element of a program or software capable to implement a function or set of functions, according to what is described below for the module. Such software component is executed by a processor of a physical entity (TV, projector, terminal, server, gateway, router, etc.) and is likely to access the hardware resources of the physical entity (memory, storage media, bus communication, e-cards I / O, user interfaces, etc.).

Similarly, a hardware component is any component of a hardware (or hardware) that can implement a function or set of functions, according to what is described below for the module. It may be a component integrated with programmable hardware or software for the execution processor, for example an integrated circuit, a smart card, a memory card, an electronic card for the execution of a firmware, etc.

Each component of the system described above provides its own software modules. The various embodiments described above can be combined together for the implementation of the invention.

## 4. Drawings

The proposed method is described in the following by way of examples in connection with the accompanying figures without limiting the scope of the protection as defined by the claim. In the figures:

- figure 1 illustrates the main features of a first aspect of the proposed technique;
- figure 2 illustrates the main features of a second aspect of the proposed technique;
- figure 3 illustrates a system in which the technique can be applied;
- figure 4 illustrates an embodiment of a device for creating content;
- figure 5 illustrates an embodiment of a device for registering content.

## 5. Detailed Description of the invention

### 5.1. Principles of the invention

As explained, when investigating a copy of content (called the "copy" in the following), the problem is to identify a distribution content from which the copy is made. The distribution content is identified by searching watermarks which are integrated in the copy. These watermarks are for example inserted in specific sets of frames in the distribution content or in specific location in frames in the distribution content. For retrieving these watermarks in the copy, it is thus first needed to identify, in the copy, this specific frames or set of frames in which the watermarks have to be found. This identification is done by registering the copy with the distribution content. The registration is done by comparing the fingerprints of the distribution content with the fingerprints of the copy.

It is recalled that, in the meaning of the present document, a major difference has to be done between a "fingerprint" which is an inherent feature or characteristic of the content and the watermark which is a specific information introduced in the content for the purpose of the investigation. With prior art solution, the problem is that since there is a plurality of distribution contents (4k, Bluray, DVD, etc.), it is currently needed to have multiple set of fingerprints (one set of fingerprints per distribution content). The proposed technique does not comprise these drawbacks.

Basically, the invention relates to a method for creating one distribution content from one original master content where the method comprises first obtaining a set of fingerprint for the original master content and then creating the distribution content, with saving, in a database, a set of transformation of the original master content. Then, when a copy content has to be registered, the invention proposes a method for registering the content where a distortion model is obtained by comparing the set of fingerprint of the original master content with a set of fingerprint of the copy content. The set of transformation is then combined with the distortion model for registering the copy content.

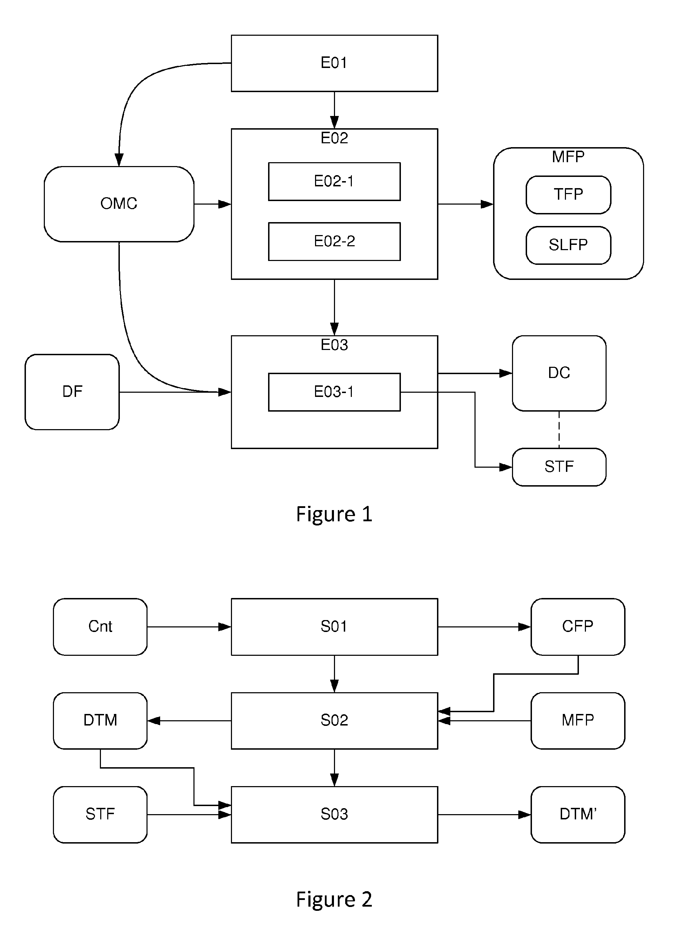

In its first aspect, the solution proposed by the inventors comprises the following steps, described in relation with figure 1 :

- optionally a selection (E01) of at least one format according to a selection parameter; the selection parameter may for example be a quality selection parameter and/or a frame rate selection parameter and/or a distortion selection parameter; the object of this selection parameter is to allow choosing the best format which results in obtaining one set of master fingerprints (MFP) which will have the highest resilience.
- calculation (E02) of one set of master fingerprints (MFP) from said at least one original master content (OMC); in this step, the content owner calculates the fingerprints of the original master content (OMC); this calculation may deliver only a subset of the fingerprints which are available: the content owner may choose only resistant fingerprints (i.e. fingerprints which may not be altered easily); according to a specific embodiment calculation of master fingerprints comprises any combination of calculation (E02-1) of temporal fingerprints and calculation (E02-2) of spatial-local fingerprints.

- creation (E03) from said at least one original master content (OMC) of at least one distribution content (DC), said creation comprising at least the recording (E03-1), in one database (DB), of one set of transformations (STF) of said at least one original master content (OMC) for obtaining said at least one distribution content (DC); the set of transformations may be for example ratio applied on the frames, frame rate, audio format, scene deletion, etc.

Thus, the solution found by the inventors is to use a unique source of fingerprints for a given content called the master fingerprints. The master fingerprints are obtained from an original content (which is called the original master content). The original master content is for example the content with the highest definition/resolution (4K or digital cinema content). For example, the choice of the master fingerprints which fits to the purpose of the proposed technique is done according to distortion considerations. This means that the fingerprints which are extracted from the original master content have to be robust in order to be identifiable into any copy (even of bad or very bad quality) of a distribution content (it is assumed that the distribution content from which a copy is done is itself derived from the original master content).

Following this initial phase, distribution contents are created. These distribution contents are created for fitting various distribution formats. These formats can vary from the original master content format by various features: resolution, length, quality of the sound, number of scene or the like.

According to the proposed technique, rather than simply creating the distribution content, a conversion parameter database is populated along with the creation of the distribution content. This database comprises, for a given original master content, all the necessary transformations made for obtaining the various distribution contents (e.g for obtaining a DVD, a Blu-ray, etc.). Typically, for one original master content and one specific distribution content, the database comprises the transformations applied: on the resolution, the format (i.e. 2.85 to 16/9, up-scaling or down-scaling), the length, the number of images per second (oversampling or downsampling), etc.

Thus, instead of having a plurality of set of fingerprints (one per content distribution format), the investigator have a single set of fingerprints (master fingerprints) and a plurality of set of transformations (one set of transformations per content distribution format).

Then, according to the proposed technique, there is no need to make several registrations for a given copy: a single registration is enough. This is an important advantage because the registration of content consumes lots of resources. Thus, the fact of processing only one real registration (i.e. the matching of the fingerprints of the fraudulent copy with the matching of the master fingerprints) highly reduces the resources necessary for obtaining a correct registered content. The decoding technique, i.e. the technique for retrieving the watermarks in a copy of one content is then widely facilitated because the registration of the copy is made on the basis of the master fingerprints. The registration is made in three steps, described in relation with figure 2, which forms the second aspect of the invention:

- extracting (S01) of the fingerprints (CFP) from the copy (Cnt) (i.e. extraction of the features which are needed for characterizing the copy); this step is made according to the copy, i.e. considering the copy, the same fingerprints are extracted that the one which have been extracted from the original content: it is supposed that the fingerprints are still present in the copy;
- estimating (S02) of a distortion model (DTM) from the copy fingerprints (CFP) and the master fingerprints (MFP); the distortion model is representative of the spatial and temporal modifications which occurred between the master content and the copy;
- in view of the targeted distribution format (i.e. for example if the assumption is made that the copy comes from a DVD or a Blu-ray or Digital Cinema), application (S03) of the transformations (STF) (extracted from the database) on the distortion model (DTM), delivering derived distortion model (DTM').

The derived distortion model (DTM') is then applied to the copy for delivering a registered copy. The registered copy is then investigated by an investigation module. The investigation module is used for retrieving one or several marks which can be included in the copy.

5.2. Description of an embodiment

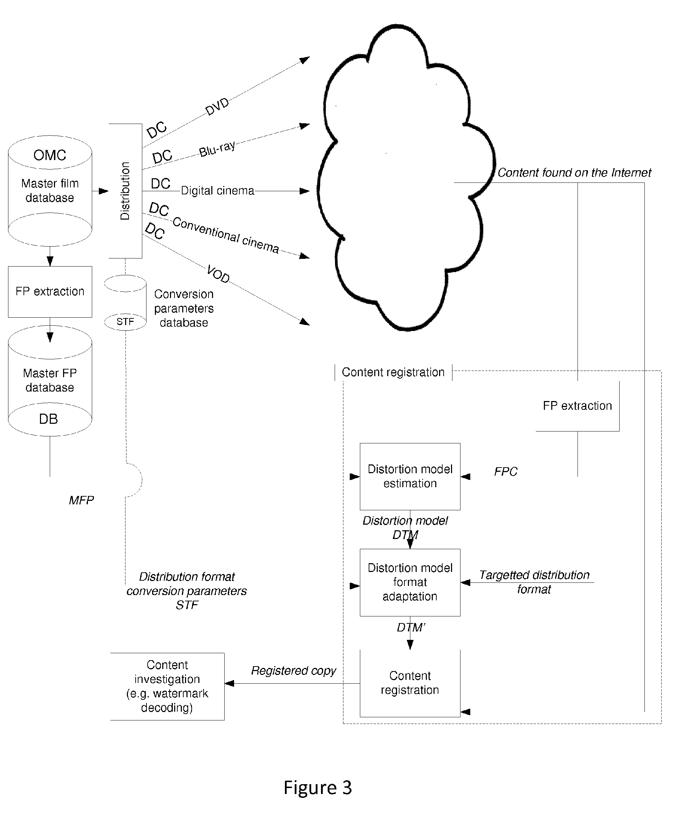

A generic block scheme of an embodiment of the proposed technique is depicted in figure 3. It is characterized by the following points:

- original master contents are analyzed in a unique base format (high definition), each distribution format being derived from it (through temporal editing, frame rate conversions and spatial re-sampling and cropping);
- temporal and spatial-local fingerprints are computed with regards to this base format and stored in a unique master FP database DB;
- for each distribution format, the temporal and spatial mapping STF with the base format is saved:

- the temporal mapping accounts for suppressed and added scenes (editing) as well as frame rate conversion ratios;
- the spatial mapping accounts for cropping (for aspect ratio change) and re-sampling;

- the master FP plus the mapping parameters to the various distribution formats are accessible by the investigation lab, when analyzing an incoming fraudulent copy;
- at investigation side, fingerprints are extracted from a content (found on the Internet) and the distortion model (which comprises a set of distortion parameters DTM) from a corresponding original master content to the content found on the Internet are estimated by matching master and copy fingerprints;
- depending on the targeted distribution format, the derived distortion Model (which comprises the set of distortion parameters DTM') from distribution format to the content found on the internet is obtained by composing the estimated distortion parameters with the mapping parameters STF from base format to distribution format:

$$DTM' = DTMoSTF^{-1} \quad (2$$

- the incoming copy can thus be registered with the targeted distribution format, by using the derived distortion parameters *DTM'*;
- eventually, the investigation analysis (e.g., watermark decoding) is performed on the registered copy.

In a preferred embodiment:

- the temporal fingerprint required for temporal registration is the sequence of distances between "RASH" vectors of successive frames;
- the spatial-local fingerprints required for spatial registration are locally defined texture descriptors around key-points, extracted on a subset of keyframes;
- the temporal mapping is described with [begin, end] frame indices of added or suppressed scenes, combined with frame rate conversion parameters (e.g. 24Hz to 30Hz with 3:2 pull down method); an alternative to this high-level representation is an exhaustive frame-to-frame index mapping between base format and distribution format.
- the spatial mapping is described with the cropping box coordinates together with a 4-parameter translation + zooming model:

$$\begin{cases} x_2 = tx + k_x \times x_1 \\ y_2 = ty + k_y \times y_1 \end{cases} \quad (1)$$

### 5.3. Devices

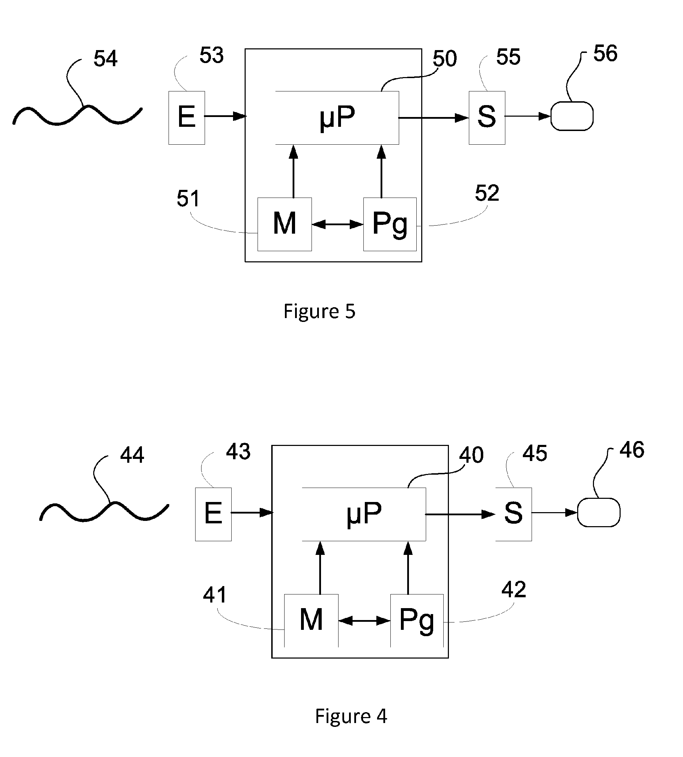

The structure of a device for the execution of the method for creating distribution contents is illustrated schematically in figure 4. It comprises a memory M 41, and a processing unit 40 equipped with a microprocessor $\mu$P, that is driven by a computer program (or application) Pg 42. At input, the processing unit 40 receives the signal 44 of an original master content through an input interface module E 43. The microprocessor $\mu$P processes signal 44 according to the instructions of the program Pg 42, to calculate the fingerprints of the original master content 46 and recording the transformation made for obtaining the distribution content, which will be transmitted through an interface module S 45. The device can be included in any system directed to the creation of distribution content, and for example system which are implemented by content owners. It can be implemented as a specific chip or integrated in a preexistent chip.

For processing the proposed techniques, the device comprises:

- a selector for selecting at least one format according to a selection parameter;
- a calculator for calculating one set of fingerprints called master fingerprints (MFP) from said at least one original master content (OMC);
- a content creator for creating from said at least one original master content (OMC), at least one distribution content (DC), in function of at least one corresponding distribution format (DF).

These modules or circuits can be implemented in the form of specific modules, such as software modules or hardware modules. In case of hardware modules, an FPGA or the like can be implemented.

The structure of a device for the execution of the method for registering content is illustrated schematically in figure 5. It comprises a memory M 51, and a processing unit 50 equipped with a microprocessor $\mu$P, that is driven by a computer program (or application) Pg 52. At input, the processing unit 50 receives the signal 54 of a content which is supposed to be fraudulent through an input interface module E 53. The microprocessor $\mu$P processes signal 54 according to the instructions of the program Pg 52, to obtain a registered content 56, (according to the master fingerprint and transformation applied to this fingerprint) which will be transmitted through an interface module S 55 to another module or equipment. The device can be included in any device which is used for investigation process. It can be implemented as a specific chip or integrated in a preexistent chip.

For processing the proposed method, the device comprises:

- an extracting module for extracting of a set of fingerprints from said content;
- an estimating module for estimating of a distortion model from the set of fingerprints and one set of fingerprints, called master fingerprints previously obtained from at least one original master content from which said content is derived;
- a calculator for calculating a derived distortion model from said distortion model in function of one set of transformations.

These modules or circuits can be implemented in the form of specific modules, such as software modules or hardware modules. In case of hardware modules, an FPGA or the like can be implemented.

**Claims**

1. A method for creating at least one distribution content (DC) from at least one original master content (OMC) **characterized in that** it comprises the following ordered steps:

   - calculating (E02) one set of fingerprints called master fingerprints (MFP) from said at least one original master content (OMC);
   - creating (E03) from said at least one original master content (OMC), at least one distribution content (DC), in function of at least one corresponding distribution format (DF).

2. The method according to claim 1 **characterized in that** said step of calculating (E02) said master fingerprints (MFP) comprises:

   - calculating (E02-1) of temporal fingerprints (TFP);
   - calculating (E02-2) of spatial-local fingerprints (SLFP).

3. The method according to claim 1 **characterized in that** said step of creating said at least one distribution content (DC) comprises, for a distribution content (DC), at least one step of recording (E03-1), in one database (DB), of one set of transformations (STF) of said at least one original master content (OMC) for obtaining said distribution content (DC).

4. The method according to claim 3 **characterized in that** said step of recording (E03-1) one set of transformations (STF) of said at least one original master content (OMC) for obtaining said distribution content (DC) comprises:

   - recording frame rate conversion ratios from said original master content (OMC) to said distribution content (DC);
   - recording temporal mapping which are representative of suppressed and added scenes from said original master content (OMC) to said distribution content (DC);
   - recording spatial mapping which are representative of cropping from said original master content (OMC) to said distribution content (DC);
   - recording spatial mapping which are representative of re-sampling from said original master content (OMC) to said distribution content (DC);

5. Computer program product downloadable from a communications network and/or stored in a computer-readable carrier and/or executable by a microprocessor, **characterized in that** it comprises program code instructions for the execution of the method according to at least one of the claims 1 to 4, when it is executed on a computer.

6. A device for creating at least one distribution content (DC) from at least one original master content (OMC) **characterized in that** it comprises:

   - a calculator for calculating (E02) one set of fingerprints called master fingerprints (MFP) from said at least one original master content (OMC);
   - a creating module for creating (E03) from said at least one original master content (OMC), at least one distribution content (DC), in function of at least one corresponding distribution format (DF).

7. A method for registering a content (Cnt) to a distribution content (DC) **characterized in that** it comprises :

   - extracting (S01) of a set of fingerprints (CFP) from said content (Cnt);
   - estimating (S02) of a distortion model (DTM) from the set of fingerprints (CFP) and one set of fingerprints, called master fingerprints (MFP) obtained from at least one original master content (OMC) from which a distribution content (DC) is obtained;

      - calculating (S03) a derived distortion model (DTM') between said content (Cnt) and said distribution content (DC) from said distortion model (DTM) in function of one set of transformations (STF) for obtaining said distribution content (DC) from said at least one original master content (OMC).

8. A device for registering a content (Cnt) to a distribution content (DC) **characterized in that** it comprises:

   - an extracting module for extracting (S01) of a set of fingerprints (CFP) from said content (Cnt);
   - an estimating module for estimating (S02) of a distortion model (DTM) from the set of fingerprints (CFP) and one set of fingerprints, called master fingerprints (MFP) previously obtained from at least one original master content (OMC) from which a distribution content (DC) is obtained;
   - a calculator for calculating (S03) a derived distortion model (DTM') between said content (Cnt) and said distribution content (DC) from said distortion model (DTM) in function of one set of transformations (STF) for obtaining said distribution content (DC) from said at least one original master content (OMC).

9. Computer program product downloadable from a communications network and/or stored in a computer-readable carrier and/or executable by a microprocessor, **characterized in that** it comprises program code instructions for the execution of the method according to said claim 7, when it is executed on a computer.

Figure 1

Figure 2

Figure 3

Figure 5

Figure 4

Europäisches
Patentamt

European
Patent Office

Office européen
des brevets

# EUROPEAN SEARCH REPORT

Application Number

EP 14 30 5974

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2013/202150 A1 (SINHA NISHITH KUMAR [US] ET AL) 8 August 2013 (2013-08-08)<br>* paragraphs [0059] - [0068]; claims 1, 5-7; figures 2A, 2B * | 1,5,6<br><br>2-4 | INV.<br>H04N21/4627<br>H04N21/83<br>G06F17/30 |
| Y | US 2011/311135 A1 (CHUPEAU BERTRAND [FR] ET AL) 22 December 2011 (2011-12-22)<br>* paragraphs [0002] - [0012]; figure 5 * | 2-4 | |
| A | US 2011/289114 A1 (YU LEI [CN] ET AL) 24 November 2011 (2011-11-24)<br>* paragraphs [0024] - [0031], [0036] - [0040], [0043], [0074] - [0086], [0108] - [0113]; claims 18-20; figures 1, 3, 4 * | 1-9 | |
| A | US 2007/242826 A1 (RASSOOL REZA P [US]) 18 October 2007 (2007-10-18)<br>* paragraphs [0015] - [0017], [0024], [0074] - [0082]; figures 1, 7 * | 1-9 | |
| A | US 2008/089551 A1 (HEATHER ASHLEY [US] ET AL) 17 April 2008 (2008-04-17)<br>* paragraphs [0007], [0015], [0019]; claims 1-2; figures 1-4 * | 1-9 | TECHNICAL FIELDS SEARCHED (IPC)<br><br>H04N<br>G06F |
| A | US 8 370 314 B2 (SPARKS DAVID L [US] ET AL) 5 February 2013 (2013-02-05)<br>* column 1, line 25 - column 4, line 24; claims 1, 3-6, 19, 20; figures 1-4 * | 1-9 | |

The present search report has been drawn up for all claims

| Place of search | Date of completion of the search | Examiner |
|---|---|---|
| Munich | 17 October 2014 | Katruff, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 30 5974

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2014

| Patent document cited in search report | | Publication date | Patent family member(s) | | Publication date |
|---|---|---|---|---|---|
| US 2013202150 | A1 | 08-08-2013 | US | 2013202150 A1 | 08-08-2013 |
| | | | US | 2013204889 A1 | 08-08-2013 |
| | | | US | 2013205212 A1 | 08-08-2013 |
| | | | US | 2013205315 A1 | 08-08-2013 |
| | | | US | 2013205316 A1 | 08-08-2013 |
| | | | US | 2013205317 A1 | 08-08-2013 |
| | | | US | 2013205318 A1 | 08-08-2013 |
| | | | US | 2013205319 A1 | 08-08-2013 |
| | | | US | 2013205321 A1 | 08-08-2013 |
| | | | US | 2013205322 A1 | 08-08-2013 |
| | | | US | 2013205323 A1 | 08-08-2013 |
| | | | US | 2013205324 A1 | 08-08-2013 |
| | | | US | 2013205325 A1 | 08-08-2013 |
| | | | US | 2013205326 A1 | 08-08-2013 |
| | | | US | 2013205330 A1 | 08-08-2013 |
| | | | US | 2013205335 A1 | 08-08-2013 |
| | | | US | 2013205338 A1 | 08-08-2013 |
| | | | US | 2013212609 A1 | 15-08-2013 |
| US 2011311135 | A1 | 22-12-2011 | EP | 2394233 A2 | 14-12-2011 |
| | | | US | 2011311135 A1 | 22-12-2011 |
| | | | WO | 2010089383 A2 | 12-08-2010 |
| | | | WO | 2010089384 A2 | 12-08-2010 |
| US 2011289114 | A1 | 24-11-2011 | US | 2011289114 A1 | 24-11-2011 |
| | | | US | 2014250450 A1 | 04-09-2014 |
| US 2007242826 | A1 | 18-10-2007 | US | 2007242826 A1 | 18-10-2007 |
| | | | US | 2014150111 A1 | 29-05-2014 |
| | | | WO | 2007121089 A2 | 25-10-2007 |
| US 2008089551 | A1 | 17-04-2008 | NONE | | |
| US 8370314 | B2 | 05-02-2013 | US | 2012109904 A1 | 03-05-2012 |
| | | | US | 2012109997 A1 | 03-05-2012 |
| | | | WO | 2012057999 A1 | 03-05-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. BAUDRY ; B. CHUPEAU ; F. LEFÈBVRE.** A framework for video forensics based on local and temporal fingerprints. *Int. Conf. on Image Processing,* 2009